(19) **Europäisches Patentamt**

**European Patent Office**

**Office européen des brevets**

(11) **EP 0 975 032 A1**

(12) **EUROPEAN PATENT APPLICATION**

(43) Date of publication:
26.01.2000 Bulletin 2000/04

(51) Int. Cl.⁷: **H01M 2/16**

(21) Application number: **99112187.2**

(22) Date of filing: **24.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **21.07.1998 JP 20465998**
**26.10.1998 JP 30357698**

(71) Applicant:
**MATSUSHITA ELECTRIC INDUSTRIAL CO., LTD.**
**Kadoma-shi, Osaka (JP)**

(72) Inventors:
• **Gomikawa, Kaori**
  **Fujisawa-shi (JP)**
• **Nitta, Yasuhiro**
  **Naga-gun, Wakayama-ken (JP)**
• **Aoki, Kenichi**
  **Naga-gun, Wakayama-ken (JP)**
• **Nara, Manabu**
  **Fujisawa-shi (JP)**
• **Yuasa, Kohji**
  **Chigasaki-shi (JP)**

(74) Representative:
**Patentanwälte**
**Leinweber & Zimmermann**
**Rosental 7,**
**II Aufgang**
**80331 München (DE)**

(54) **Alkaline storage battery comprising a non-woven, fibrous, polyolefinic separator**

(57)     The present invention relates to an improvement in the separator of an alkaline storage battery, according to which percent leak defective in the battery preparation can be reduced and a battery with intended characteristic properties can be provided with good efficiency by using a separator that uses a non-woven fabric having a higher puncture strength than that of a prior separator which has the same unit area weight and the same thickness. The battery comprises a positive electrode, a negative electrode, a separator of a non-woven fabric comprising polyolefin resin fibers and having hydrophilic groups imparted thereto and an alkaline electrolyte, wherein the separator comprises at least two kinds of polyolefin fibers different in strength, the polyolefin fiber having the highest strength among the polyolefin fibers being a high modulus polyolefin fiber, the amount of said fiber being 5-50% of the fibers constituting the whole separator.

**EP 0 975 032 A1**

**Description**

BACKGROUND OF THE INVENTION

1. Field of the Invention

The present invention relates to an improvement in alkaline storage batteries, particularly separators used therefor.

2. Description of Related Art

Alkaline storage batteries now in wide use as a variety of electric sources have expectedly a high reliability and allow the reduction of their size and weight. Accordingly, they have been widely used in practice, the smaller-sized ones as electric sources for various portable instruments and the larger-sized ones as industrial electric sources.

In such alkaline storage batteries, the positive electrode widely in use are nickel electrodes. As to the type of the electrode plate, it has advanced from the pocket type to the sintered type and the foamed metal type, with resultant improvement in its characteristic properties, and the application field has further extended with the development of the closed type electrodes.

On the other hand, the materials used for the negative electrode are, besides cadmium, zinc, iron, hydrogen absorbing alloy, etc. Up to now, cadmium electrodes have been mainly used to provide nickel-cadmium storage batteries. To attain a higher energy density, however, nickel-metal hydride storage batteries using hydrogen absorbing alloy have attracted attention and, as such batteries have reached the stage of practical usage, many proposals have been made as to the method for preparation thereof and other related aspects.

In a closed type alkaline storage battery, in general, such properties as high capacity, high rate chargeability, long life and long-term reliability are eagerly desired. To meet such demands, efforts have been made to improve the filling property and utilization ratio of the electrode active material, the gas absorbing ability at the negative electrode and the hydrophilic property of the separator.

The separator of an alkaline storage battery is required to have a function to separate the positive and the negative electrodes from each other and a function to retain the electrolyte. Since defection in the battery preparation process is mainly caused by the physical minute (internal) short circuit between the positive and the negative electrodes (hereinafter referred to as "leak"), improving the function of the separator of separating the positive and the negative electrodes from each other (said function being hereinafter referred to as "the leak resistance of a separator") makes it possible to reduce the occurrence of defective products in the battery preparation process.

The improvement of the leak resistance of a separator may be attained, for example, by increasing the amount of fiber of the separator and thereby increasing the weight of the separator per unit area (hereinafter referred to as "unit area weight") or by increasing the thickness of the separator to increase the distance between the positive and the negative electrodes.

However, in order to secure an intended high capacity and cycle life characteristic of a battery, respective predetermined amounts of positive and negative electrode materials and electrolyte must be filled in the battery. Accordingly, separators built into a battery are limited as to their unit area weight and thickness.

Thus, it has been an important problem to improve the leak resistance of a separator and thereby to reduce the leak defection in the battery preparation process without increasing the fiber amount of the separator and without increasing its thickness.

BRIEF SUMMARY OF THE INVENTION

The object of the present invention is to provide an alkaline storage battery with less occurrence of leak defection in the preparation process thereof by improving the separator used for the alkaline storage battery thereby to improve the leak resistance of the separator.

To attain the above-mentioned object, the present invention provides an alkaline storage battery comprising a positive electrode, a negative electrode, a separator of a non-woven fabric comprising polyolefin resin fibers and having hydrophilic groups imparted thereto and an alkaline electrolyte, wherein the separator comprises at least two kinds of polyolefin fibers different in strength, the polyolefin fiber having the highest strength among said polyolefin fibers being a high modulus polyolefin fiber, the amount of said fiber being 5-50% by weight of the total fibers constituting the whole separator.

The high modulus polyolefin fiber is preferably a high modulus polypropylene fiber. The separator of the present invention preferably has a puncture strength, measured using a cutter blade, improved at least 10% as compared with a separator which does not use the high modulus polypropylene fiber and has the same unit area weight and the same thickness as those of the separator of the present invention.

BRIEF DESCRIPTION OF THE SEVERAL VIEWS OF THE DRAWINGS

Figs. 1 is a diagram showing the result of X-ray diffraction analysis of the high modulus polypropylene fiber used in one Example of the present invention.

Fig. 2 is a diagram showing the result of X-ray diffraction analysis of a common (not high modulus) polypropylene fiber.

Fig. 3 is a schematic diagram of the incidence of X-ray in a direction perpendicular to the fiber direction of the high modulus polypropylene fiber used in the Example of the present invention.

Fig. 4 is a schematic diagram of the incidence of X-ray in a direction parallel to the fiber direction of the high modulus polypropylene fiber.

Fig. 5 is a diagram showing the result of the differential scanning calorimetry of the high modulus polypropylene fiber.

Fig. 6 is a diagram showing the result of the differential scanning calorimetry of a common (not high modulus) polypropylene fiber.

Fig. 7 is a diagram showing the result of differential scanning calorimetry of a polypropylene/ polyethylene core-sheath type composite fiber.

Fig. 8 is a graph showing the result of determination of the puncture strength and the displacement (elongation) of the separator E used in Example 2 of the present invention.

Fig. 9 is a graph showing the result of determination of the puncture strength and the displacement (elongation) of the separator F used in Example 2 of the present invention.

Fig. 10 is a graph showing the result of determination of the puncture strength and the displacement (elongation) of the separator G used in the Comparative Example.

DETAILED DESCRIPTION OF THE INVENTION

The first aspect of the present invention relates to an alkaline storage battery comprising a positive electrode, a negative electrode, a separator of a non-woven fabric comprising polyolefin resin fibers and having hydrophilic groups imparted thereto and an alkaline electrolyte, wherein the separator comprises at least two kinds of polyolefin fibers different in strength, the polyolefin fiber having the highest strength among said polyolefin fibers being a high modulus polyolefin fiber, the amount of said fiber being 5-50% by weight, preferably 10-40% by weight, more preferably 25-35% by weight of the total fibers constituting the whole separator.

By virtue of the above-mentioned structure, the leak resistance of the separator is improved and the occurrence rate of leak defection between the positive and the negative electrodes in the battery preparation process can be markedly decreased.

The term "high modulus polyolefin fiber" used in the present specification refers to a polyolefin fiber having a fiber modulus of at least 6 g/denier as determined according to JIS L1015.

The high modulus polyolefin fiber is preferably a high modulus polypropylene fiber.

The high modulus polypropylene fiber is preferably a polypropylene fiber which, upon incidence of X-ray thereon in the direction perpendicular to the fiber direction in X-ray diffraction analysis, shows three diffraction peaks, namely the first peak, the second peak and the third peak, in the range of 10-20 degrees; in this fiber, preferably the intensity of the first peak observed upon incidence of X-ray in the direction perpendicular to the fiber direction is at least 7 times the intensity at the same position observed upon incidence in the direction parallel to the fiber direction.

Preferably, the high modulus polypropylene fiber shows a peak value of the endothermic temperature in the differential scanning calorimetry at least 5°C higher than that of a common polypropylene fiber.

The separator used in the above-mentioned alkaline storage battery preferably uses a non-woven fabric which gives a puncture strength of a separator, obtained by using the fabric, at least 10% higher than that of a separator obtained by using a non-woven fabric which contains no high modulus polypropylene fiber and has the same unit area weight and the same thickness as those of the former non-woven fabric.

The above-mentioned separator is preferably a non-woven fabric comprising polyolefin resin fibers which has been subjected to a hydrophilicity imparting treatment. By sulfonating the ethylene component in a polyolefin resin fiber, which is deficient in hydrophilicity, with sulfuric acid or fuming sulfuric acid, the resin fiber is modified with a sulfonic acid group, which is a hydrophilic group, and the fabric can be imparted a long-term hydrophilicity to serve as a separator. In the sulfonation treatment, however, severe embrittlement of the fiber may be caused by the strong acid at the time of hydrophilicity imparting treatment; so that, when the amount of fiber is small, the leak resistance of the fabric and its strength necessary in constructing a battery are apt to be deteriorated. Therefore, it is effective for avoiding such disadvantages to incorporate a high modulus fiber into the fabric. Furthermore, the incorporation of high modulus fiber makes it possible to reduce the unit area weight of the sulfonated separator and to increase the content of the sulfonic acid group of the separator.

The separator used in the present invention may also be a product obtained by modifying the surface of a fiber which is deficient in hydrophilicity with a carboxyl group, which is a hydrophilic group, to impart a long-term hydrophilicity to the fiber. The hydrophilic group may also be imparted by graft polymerization of acrylic acid.

The second aspect of the present invention relates to an alkaline storage battery comprising a positive electrode, a negative electrode, a separator of a non-woven fabric comprising polyolefin resin fibers and having hydrophilic groups imparted thereto and an alkaline electrolyte, wherein the separator has a puncture strength index (gf/mm) (the puncture strength index of a separator herein signifying the puncture strength of the separator (gf) divided by the displacement (elongation) of the separator (mm) which takes place until the separator is punctured through) per unit area weight of the separator of 1 $g/m^2$ of at least 6 gf/mm, preferably at least 7 gf/mm.

The separator described above has the advantage of markedly decreasing the occurrence of leak defection caused in the battery preparation process by the cut sections of the positive and the negative electrode plates or by minute protrusions due to bending of the electrode plate which may take place when the positive and the negative electrode plates are spirally coiled with the separator interposed therebetween to form an electrode plate assembly.

Example

The present invention is described in detail below with reference to Examples.

Example 1

In the present Example 1, description is given, as an example, of a nickel-metal hydride storage battery that uses as the separator a polyolefin non-woven fabric which uses as the high modulus polyolefin fiber a high modulus polypropylene fiber and has been subjected to a sulfonation treatment.

[Preparation of separator]

The polyolefin non-woven fabric subjected to a sulfonation treatment (hereinafter abbreviated as "sulfonated separator") was prepared by the following procedure. Eighty % by weight of a polypropylene/ polyethylene core-sheath composite fiber (average fiber diameter: about 13 μm, average fiber length: about 50 mm) and 20% by weight of a high modulus polypropylene fiber (average fiber diameter: about 19 μm, average fiber length: about 50 mm) were blended and formed into a non-woven fabric having a unit area weight of $52 \pm 6$ $g/m^2$ by the dry method. The non-woven fabric was immersed in a fuming sulfuric acid of a temperature of 35°C and a concentration of 20% for about 20 minutes, then washed with water, dried and treated with a calender to obtain a separator A of the present Example which had a sulfonation degree (number of sulfur atoms per number of carbon atoms) of $2.5 \times 10^{-3}$ and a thickness of $120 \pm 20$ μm.

Then, 70% by weight of a polypropylene/ polyethylene core-sheath composite fiber and 30% by weight of a high modulus polypropylene fiber, the fibers being respectively the same as used for the separator A, were blended and formed into a non-woven fabric having a unit area weight of $59 \pm 3$ $g/m^2$ by the wet method. The non-woven fabric was subjected to a sulfonation treatment in the same manner as used for the separator A to obtain a separator B of the present Example which had a sulfonation degree of $2.5 \times 10^{-3}$ and a thickness of $120 \pm 20$ μm.

As Comparative Examples, separators wherein no high modulus polypropylene fiber was used were prepared as follows.

A sulfonated separator was prepared in the same manner as used for the separator A except that 80% by weight of the polypropylene/polyethylene core-sheath composite fiber and 20% by weight of a common polypropylene fiber (average fiber diameter: about 19 μm, average fiber length: about 50 mm) were blended, which was designated as the separator C. The fiber modulus of the common polypropylene fiber was 5 g/denier. Separately, a sulfonated separator was prepared in the same manner as used for the separator B except that 70% by weight of the polypropylene/polyethylene core-sheath composite fiber and 30% by weight of the same common polypropylene fiber as used for the separator C were blended, which was designated as the separator D.

Nickel-metal hydride storage batteries were prepared by respectively using the 4 kinds of separators, A, B, C and D, obtained above and the percent defective due to physical leak in the battery preparation and the cycle life performance of the batteries were examined.

[Analysis of separator]

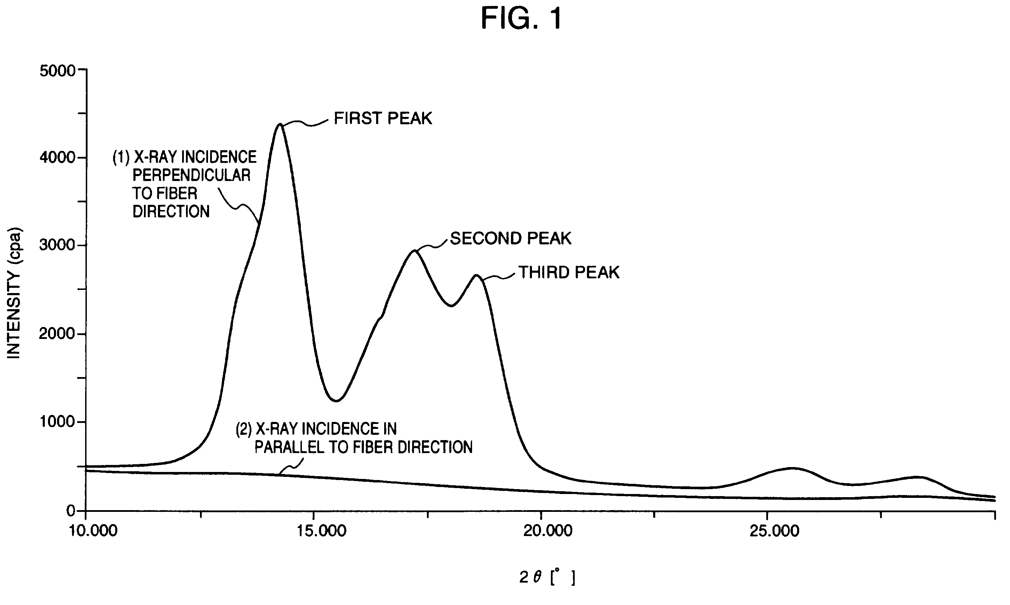

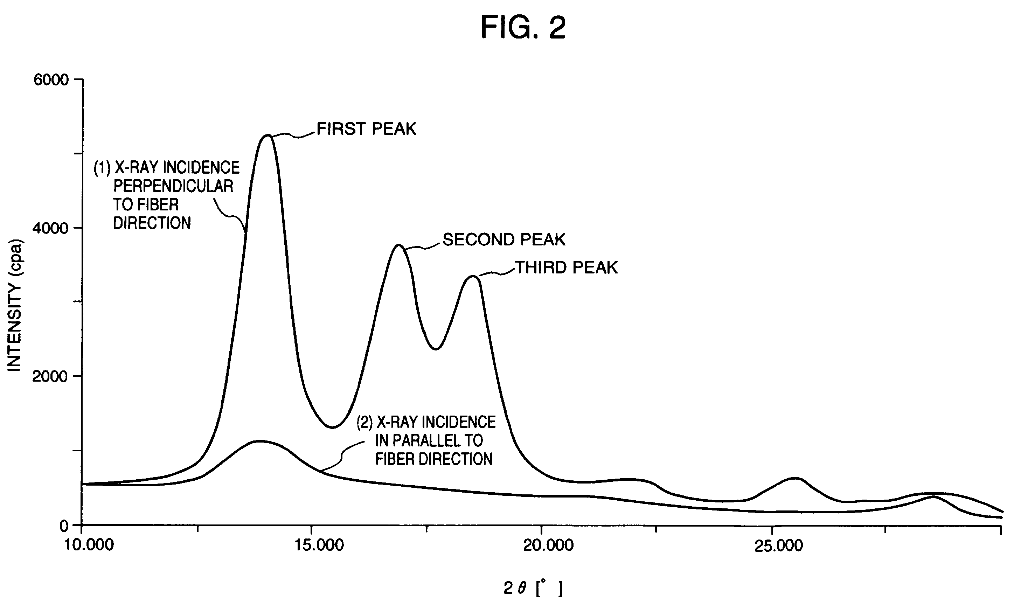

The result of X-ray diffraction analysis of the high modulus polypropylene fiber used in the separators A and B of the Example is shown in Fig. 1, and the result of X-ray diffraction analysis of the common polypropylene fiber used in the separators C and D of Comparative Example is shown in Fig. 2.

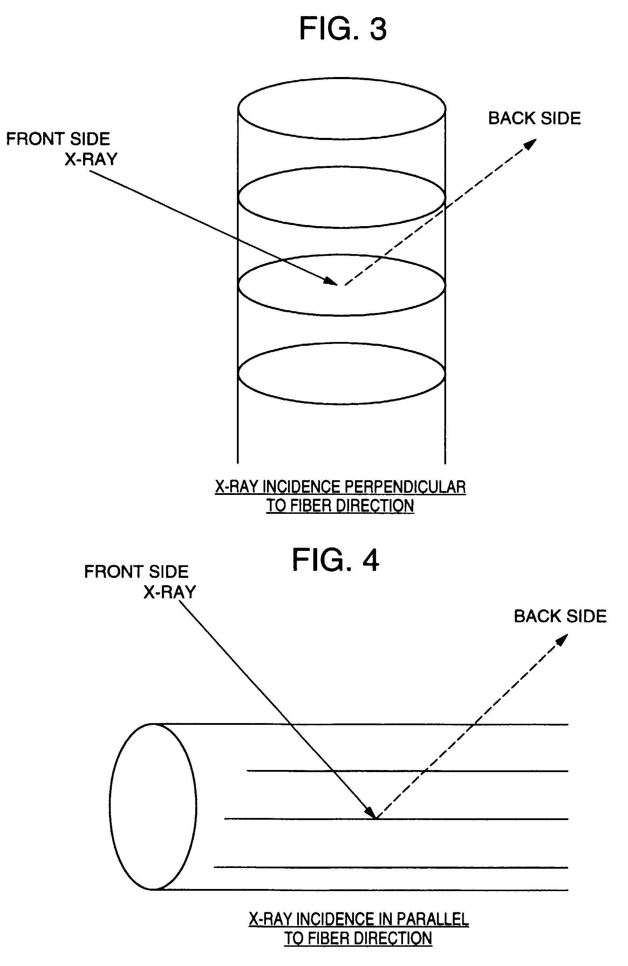

The X-ray diffraction analysis was made by using RINT 2500 (a trade name, mfd. by Rigaku Denki K.K.) under the following conditions: tube : Cu, tube voltage : 50 kV, tube current: 150 mA. The X-ray diffraction analysis was made in two ways, that is, in the case where the incident X-ray was perpendicular to the fiber direction as shown in Fig. 3 and in the case where the incident X-ray was parallel to the fiber direction as shown in Fig. 4.

As shown in Fig. 1, the high modulus polypropylene fiber used in the separators A and B showed, in the case (1) where the incident X-ray was perpendicular to the fiber direction, three diffraction peaks, namely the first peak, the second peak and the third peak, in the range of 10-20 degrees but showed, in the case (2) where the incident X-ray was parallel to the fiber direction, no peak in the range of 10-20 degrees. The peak intensity at the position of the first peak observed in the case of perpendicular incidence was 10.2 times the intensity observed at the same position in the case of parallel incidence.

On the other hand, as shown in Fig. 2, the common polypropylene fiber used in the separators C and D of the Comparative Example showed, in the case (1) where the incident X-ray was perpendicular to the fiber direction, three peaks in the range of 10-20 degrees and showed, in the case (2) where the incident X-ray was parallel to the fiber direction, one diffraction peak in the range of 10-20 degrees at the same position as that of the first peak observed in the perpendicular incidence. The peak intensity at the position of the first peak observed in the case of perpendicular incidence was 4.6 times the intensity observed at the same position in the case of parallel incidence.

Thus, it was revealed that the high modulus polypropylene fiber had a markedly improved fiber orientation as compared with the common polypropylene fiber.

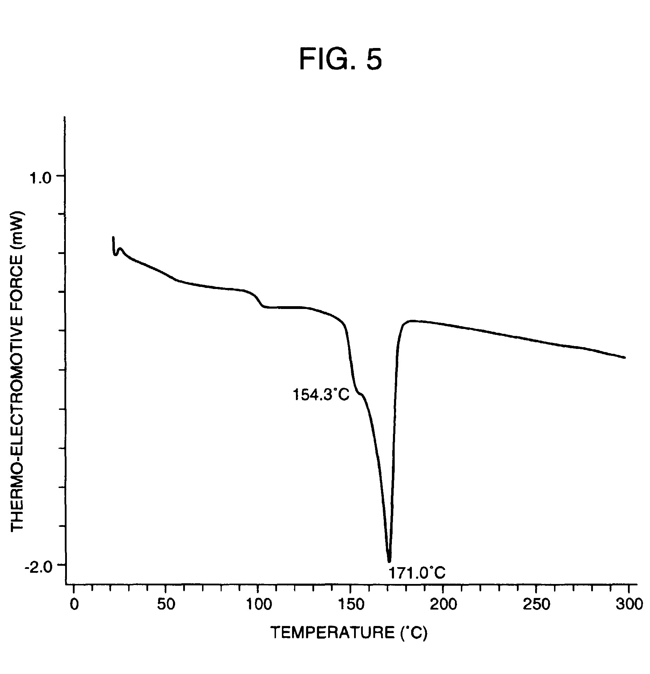

Then, the differential scanning calorimetry (hereinafter abbreviated as DSC) of the high modulus polypropylene fiber was made plural times and a typical DSC diagram thus obtained is shown in Fig. 5. The DSC apparatus used was a Shimadzu heat flow rate differential scanning calorimeter DSC-50 (a trade name, mfd. by Shimadzu Corp.). The determination was made at a temperature increasing rate of 10°C/min. The peak temperature was 171.0°C.

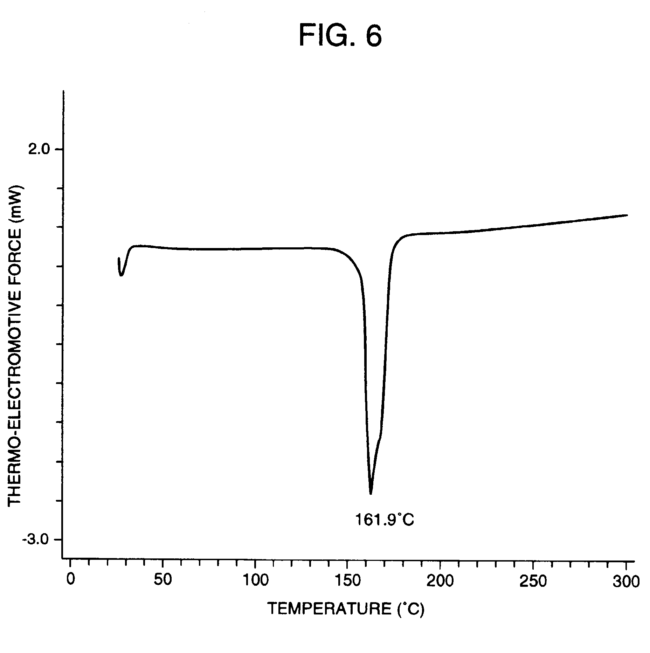

For comparison, the DSC diagram of the common polypropylene fiber was determined plural times under the same measuring conditions as described above, and a typical result is shown in Fig. 6. The peak temperature was 161.9°C.

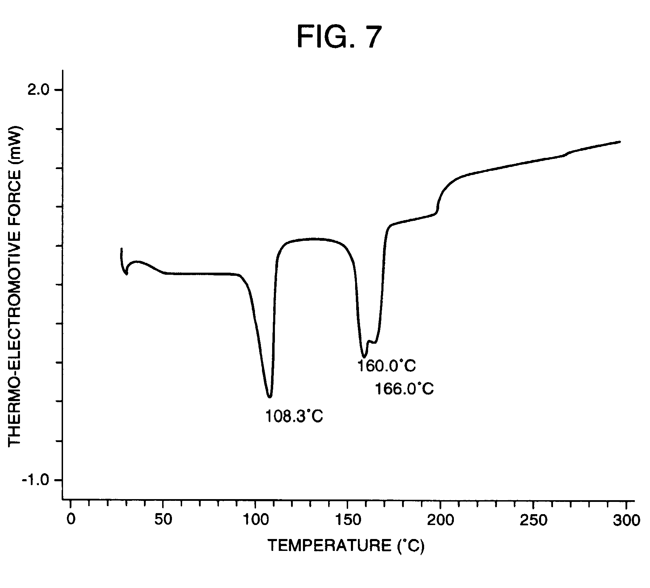

Separately, the DSC diagram of the polypropylene/polyethylene core-sheath composite fiber used in the above-mentioned 4 kinds of separators was determined plural times in the same manner as described above, and a typical result thus obtained is shown in Fig. 7. As shown in Fig. 7, the peak temperature of the polyethylene component was observed at 108°C, and the peak temperatures of polypropylene were 160°C and 166°C.

From the results of DSC described above, it can be seen that the high modulus polypropylene fiber shows an endothermic peak temperature 5°C or more higher than that of the common polypropylene fiber and hence has a higher heat stability. Accordingly, it can be estimated that the separator having a high modulus fiber incorporated thereinto of the present invention will be not only improved in the leak resistance at the time of battery preparation but also more stable to temperature increase which accompanies the battery operation.

The separators A and B of the Example and the separators C and D of the Comparative Example were examined for their puncture strength. The puncture strength was determined with a KES-G5 needle puncturing strength measuring apparatus (mfd. by KATO TECH CO., LTD.) using a probe of a cutter blade form; the probe was punctured perpendicularly to the thickness direction of the separator at a rate of 0.2 mm/sec and the puncture strength at the time of puncturing through was determined.

The use of such a cutter blade-formed probe is based on the presumption of internal short circuit due to burr formed in cutting an electrode plate and of physical leak caused by the separator fiber being cut owing to contact of the electrode end plane with the separator. Since the value of puncture strength actually determined is susceptible to the effect of the degree of cutter blade abrasion, the four kinds of separators were examined at the same time under the same conditions. The value of the puncture strength index of the separator A of the Example when the value of the separator C of the Comparative Example is taken at 100 and the value of the puncture strength index of the separator B of the Example when the value of the separator D of the Comparative Example is taken at 100 are shown in Table 1.

Table 1

| Separator | Unit area weight (g/m$^2$) | Preparation method of base fabric | Compounding ratio of high modulus polypropylene fiber (wt %) | Puncture strength (index) |
|---|---|---|---|---|
| A | 52 | Dry method | 20 | 115 |
| C | | | 0 | 100 |
| B | 62 | Wet method | 30 | 121 |
| D | | | 0 | 100 |

As is apparent from Table 1, the separator A of the Example containing 20% by weight of the high modulus polypropylene fiber incorporated thereto showed a 15% higher strength as compared with the separator C of the Comparative Example containing no high modulus polypropylene fiber. Also, when the separator B of the Example is compared with the separator D of the Comparative Example, both of which use a non-woven fabric which has a larger unit area weight than in the separator A of the Example and the separator C of the Comparative Example, the separator B of the Example, which contains 30% by weight of the high modulus polypropylene fiber, showed a 21% higher strength as compared with the separator D of the Comparative Example containing no high modulus polypropylene fiber.

As described above, the separator which used a fiber showing a higher X-ray diffraction peak intensity ratio gave a higher puncture strength. The strength of a fiber improves as the orientation of the fiber is higher. At the unit area weight and the thickness of the separator of the present invention, the effect of improving the puncture strength became clearly exhibited when a fiber which showed a diffraction peak intensity ratio of 7 or more was used.

The amount of the high modulus polypropylene fiber incorporated to constitute the separator is preferably 5-50% by weight based on the total weight of the separator. When the amount is in the above-mentioned range, the leak resistance at the time of battery preparation is effectively improved, and the shape of the non-woven fabric is easily maintained with the aid of the adhesiveness of the fiber.

Though, in the above-mentioned methods of preparing separators, the separator A of the Example and the separator C of the Comparative Example used the dry method while the separator B of the Example and the separator D of the Comparative Example used the wet method, the strength of a separator against puncturing with a cutter was higher in the separators A and B, which used the high modulus polypropylene fiber, than in the separators C and D, which did not use the high modulus polypropylene fiber, irrespective of whether the separator was prepared through the dry method or the wet method.

[Preparation of battery]

Sealed-type nickel-metal hydride storage batteries of HR 17/67 size each having a nominal capacity of 3800 mAh were prepared by using respectively the separator A of the Example and the separator C of the Comparative Example. The batteries thus obtained were respectively designated as the battery A and the battery C.

Sealed-type nickel-metal hydride storage batteries of SUM-4 size each having a nominal capacity of 650 mAh were prepared by using respectively the separator B of the Example and the separator D of the Comparative Example. The batteries thus obtained were respectively designated as the battery B and the battery D.

The materials other than the separators used for the batteries A, B, C and D are shown below.

The paste-type nickel positive electrode used was prepared by adding 7 parts by weight of cobalt hydroxide powder and water to 100 parts by weight of nickel hydroxide powder of the active material to which a small amount of zinc, cobalt or the like had been added to form a coprecipitated state, kneading the resulting mixture into the form of paste, filling the paste into a spongy nickel porous plaque, followed by drying and pressing, then dipping the porous plaque in a fluororesin dispersion, followed by drying, and then cutting the dried product into the desired dimension.

The hydrogen absorbing alloy used for the negative electrode was prepared by grinding a hydrogen absorbing alloy of a composition formula of $MmNi_{3.55}Mn_{0.4}A\ell_{0.3}Co_{0.75}$ (Mm representing a mixture of rare earth elements) having a crystal structure of $CaCu_5$ type in a ball mill to form a fine powder having an average particle diameter of 25 $\mu$m, treating the powder by dipping it in an aqueous potassium hydroxide solution at 80°C, followed by washing with water, then mixing the powder treated above with a dispersion of styrene-butadiene rubber, carboxymethyl cellulose, carbon and water to form a paste, coating the paste on a punched metal sheet of nickel-plated iron, followed by drying and pressing, and cutting the resulting sheet into the desired dimension.

Then, the above-mentioned paste-type positive electrode, a separator having a length of two times the positive electrode length plus 40 mm and a negative electrode having a theoretical capacity of 1.4-1.5 times the theoretical capacity of the positive electrode and a length of the positive electrode length plus 35 mm were combined and spirally coiled to form a sealed battery. The electrolyte used was prepared by dissolving LiOH • H$_2$O in an aqueous potassium hydroxide solution of a specific gravity of 1.30 to a concentration of 40 g/$\ell$.

The batteries A, B, C and D prepared above were each subjected to 3 cycles of preliminary charge and discharge in an atmosphere at 20°C and then subjected to a cycle life test. Separately, the percent defective due to physical leak in the battery preparation was calculated as the ratio of the number of defective cells to the number of total cells constructed. The percent defective due to physical leak between the positive and the negative electrodes in the preparation process of the batteries A, B, C and D and the cycle life characteristic thereof are shown in Table 2.

Table 2

| Battery | Percent defective in battery preparation | Life (60% keep cycle) |
|---|---|---|
| A | 0.8% | 300 cycles |
| C | 1.2% | |
| B | 0.3% | 500 cycles |
| D | 0.6% | |

As shown in Table 2, the percent defective due to physical leak between the positive and the negative electrodes in the preparation process of the batteries A and C was 0.8% for the battery A and 1.2% for the battery C.

The cycle life characteristic shown in Table 2 was determined by charging and discharging the battery with a current of 1 CmA in an atmosphere at 20°C, the charging being regulated by -ΔV (-ΔV = 10 mV) and the discharging being conducted until the terminal voltage of the battery reached 1.0V.

Table 2 reveals that both the battery A of the Example and the battery C of the Comparative Example can maintain a capacity of 60% or more of the nominal capacity until 300 cycles and thus the battery A and the battery C do not differ in the cycle life characteristic of battery.

As shown also in Table 2, the percent defective due to physical leak in the battery preparation process of the batteries B and D was 0.3% for the battery B and 0.6% for the battery D. In the cycle life test conducted under the same conditions as above, it was revealed that both the batteries B and D could maintain a capacity of 60% or more of the nominal capacity until 500 cycles and thus did not differ in the life characteristic of battery.

As shown in Table 2, the level of percent defective due to physical leak between the positive and the negative electrodes in the battery preparation process differs between the batteries A, B and the batteries C, D as the result of the difference in unit area weight shown in Table 1. However, when batteries of which the separators have the same unit area weight were compared, that is, the battery A was compared with the battery C and the battery B with the battery D, in both cases the batteries A and B of the Example, which use a separator having high modulus polypropylene fiber incorporated thereto, showed a lower leak defection percentage and gave a better battery performance than the batteries C and D of the Comparative Example, respectively.

When the unit area weight and the thickness of the separator are respectively within the range used in the present Example described above, approximately the same effects as in the Example were obtained when the amount of the high modulus polypropylene fiber incorporated was 5-50% by weight. The amount of the high modulus polypropylene fiber incorporated is preferably 10-40% by weight, more preferably 25-35% by weight.

The above-mentioned effect of high modulus polypropylene fiber could be observed not only with a separator wherein the hydrophilicity had been imparted by sulfonation but also with a separator wherein the hydrophilicity had been imparted by graft polymerization of acrylic acid.

The acrylic acid graft polymerization was conducted in the following manner.

A polypropylene non-woven fabric was dipped in a solution comprising 20% by weight of acrylic acid, 76.7% by weight of distilled water, 0.2% by weight of benzophenone, 0.1% by weight of ferrous sulfate and 3.0% by weight of a nonionic surfactant for 10 minutes. The solution used had been deoxidized preliminarily in order to eliminate the influence of oxygen in the subsequent polymerization treatment as much as possible. The non-woven fabric treated above was removed of excess solution and then irradiated from the both sides with ultraviolet light of an intensity of 200 mW/cm$^2$ by using a metal halide lamp in a deoxidized atmosphere of about 90°C to effect graft polymerization of acrylic acid. The fabric was then washed with water, dried, and treated with a calender to obtain a separator having a unit area weight of 59 ± 5 g/m$^2$, a thickness of 120 ± 20 μm and a graft polymerization ratio of acrylic acid of 9 ± 2%. The separator was examined for the puncture strength. A battery of SUM-4 size using the separator was prepared and examined for its percent defective and the cycle life characteristic. The results thus obtained showed similar good effects to those obtained with the separator B of the Example and the battery B using the separator.

The high modulus polyolefin fiber may also be a high modulus polyethylene fiber or a composite fiber of high modulus polyethylene and high modulus polypropylene.

The hydrophilicity imparting treatment for a separator may also be conducted by coating a surfactant or by corona discharge to obtain a similar effect.

The above-mentioned effect of the high modulus polypropylene fiber can be similarly obtained in alkaline storage batteries other than nickel-metal hydride storage batteries, which include nickel-cadmium storage batteries, nickel-zinc storage batteries and manganese dioxide-metal hydride storage batteries.

Example 2

In Example 2, description is given, as an example, of a nickel-metal hydride storage battery which uses as the separator a non-woven fabric comprising polyolefin fibers which has been subjected to a sulfonation treatment.

[Preparation of separator]

The sulfonated separator was prepared by the following procedure. By using a polypropylene/polyethylene core-sheath type composite fiber (average fiber diameter: about 13 μm, average fiber length: about 10 mm), a non-woven fabric having a unit area weight of $59 \pm 4$ g/m$^2$ was prepared by the wet method. The non-woven fabric was immersed in a fuming sulfuric acid of a temperature of 35°C and a concentration of 20% for 20 minutes, then washed with water, dried, and treated with a calender to obtain a separator E of the Example 2 of the present invention which had a sulfonation degree (number of sulfur atoms per number of carbon atoms) of $2.5 \times 10^{-3}$ and a thickness of $120 \pm 20$ μm.

Separately, 70% of the polypropylene/polyethylene core-sheath type composite fiber used for the separator E and 30% of a high modulus polypropylene fiber (average fiber diameter: about 19 μm, average fiber length: about 10 mm) having a fiber strength of 7~9 g/denier (as determined according to JIS L1015: method of determination for chemical fiber staple) were blended and formed into a non-woven fabric having a unit area weight of $59 \pm 4$ g/m$^2$ by the wet method. The non-woven fabric was subjected to a sulfonation treatment in the same manner as used for the separator E to obtain a separator F of the present Example which had a sulfonation degree of $2.5 \times 10^{-3}$ and a thickness of $120 \pm 20$ μm.

Further, by using a polypropylene/polyethylene core-sheath type composite fiber (average fiber diameter: about 13 μm, average fiber length: about 50 mm), a non-woven fabric having a unit area weight of $62 \pm 6$ g/m$^2$ was prepared by the dry method (carding method). The non-woven fabric was subjected to a sulfonation treatment in the same manner as used for the separator E to obtain a separator G of the Comparative Example having a sulfonation degree of $2.5 \times 10^{-3}$ and a thickness of $120 \pm 20$ μm.

The three kinds of separators, E, F and G, were respectively determined for their puncture strength. Nickel-metal hydride storage batteries, namely batteries E, F and G, were prepared by using the respective separators, and the percent defective due to physical leak in the battery preparation process and the cycle life characteristic of the batteries were examined.

[Examination of separator]

The separators E, F and G were respectively cut to a size of 400 cm$^2$, and the weight of each specimen obtained was determined with an electronic balance. By using the same specimen, the puncture strength of each separator was determined. The determination was made by using a KES-G5 needle puncturing strength measuring apparatus (mfd. by KATO TECH CO., LTD.). The needle of the puncturing probe had a diameter of 1 mm, the shape of its tip was spherical (0.5 R) and the puncturing speed was 0.2 mm/sec. The determination was made 5 times at optional points for each of the separators. The index of the strength of a separator to puncturing was determined from the equation: puncture strength index of separator (gf/mm) = puncture strength of separator (gf)/displacement of separator (mm) which takes place until the separator is punctured through.

Examples of the determination of the puncture strength index of the separators E, F and G are described in detail below.

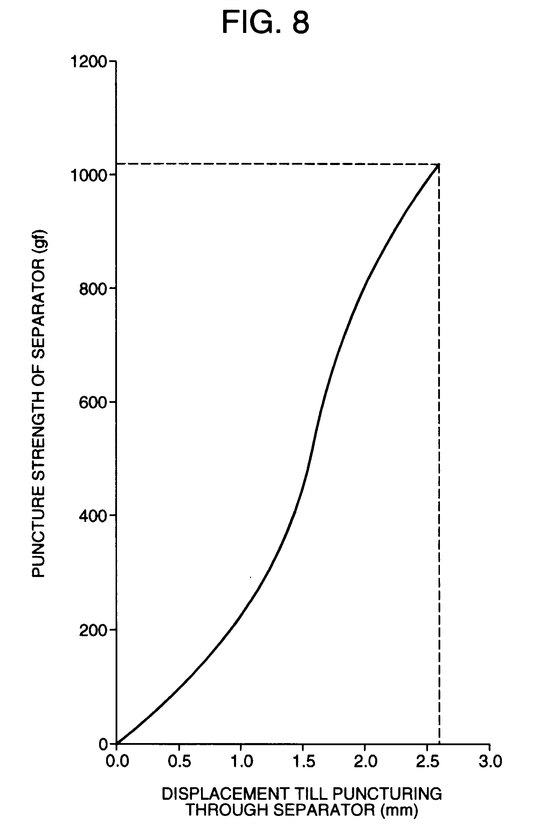

In Fig. 8, the X-axis stands for the displacement of the puncturing probe which takes place when the probe is pushed against the separator, and the Y-axis stands for the pressure applied to the separator when the probe is pushed against the separator. The displacement of the puncturing probe represents the elongation of the separator, and the pressure at the break of the separator represents the puncture strength (withstanding pressure).

As shown in Fig. 8, when the pressure applied to the separator E reached 1015 gf, the separator was deformed 2.60 mm and broken. The unit area weight of the separator E was 56.1 $g/m^2$. The puncture strength index of the separator E was found to be 390.38 gf/mm. The strength index of the separator E per unit area weight of 1 $g/m^2$ was calculated at 6.96 gf/mm.

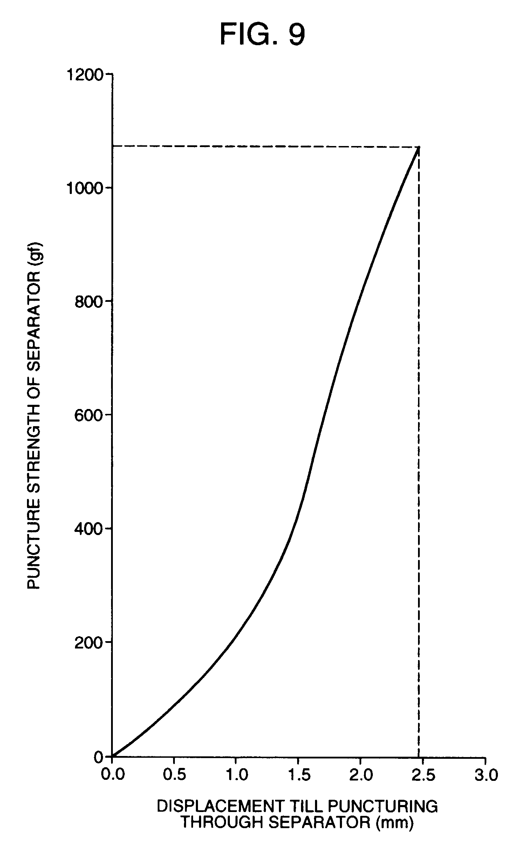

The data of puncture strength determination of the separator F of the Example are shown in Fig. 9. The determination was made under the same conditions as used for the separator A. As shown in Fig. 9, when the pressure applied to the separator F reached 1060 gf, the separator F was deformed 2.45 mm and broken. The unit area weight of the separator F was 60.3 $g/m^2$. The strength index of the separator F was found to be 432.65 gf/mm. The strength index of the separator F per unit area weight of 1 $g/m^2$ was calculated at 7.18 gf/mm.

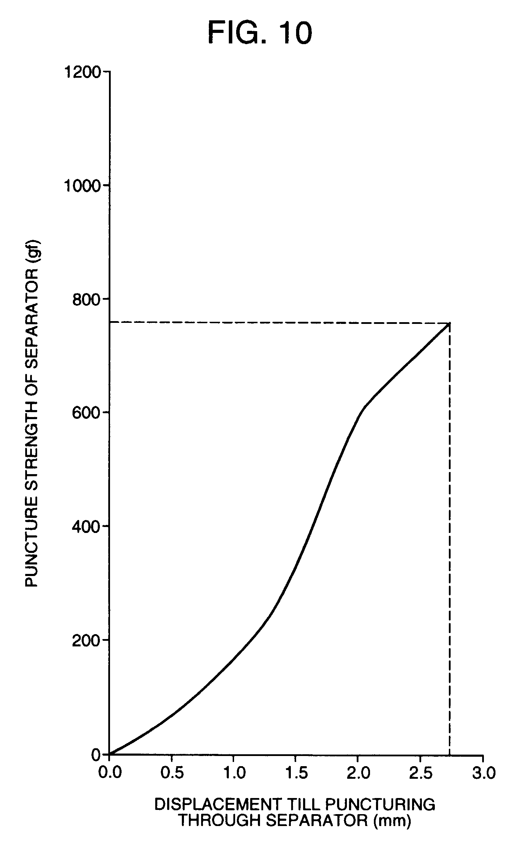

The data of puncture strength determination of the separator G of the Comparative Example are shown in Fig. 10. The determination was made under the same conditions as used for the separator E. As shown in Fig. 10, when the pressure applied to the separator G reached 760 gf the separator G was deformed 2.75 mm and broken. The unit area weight was 63.3 $g/m^2$. The strength index of the separator G was found to be 276.36 gf/mm. The strength index of the separator G per unit area weight of 1 $g/m^2$ was calculated at 4.37 gf/mm.

From the above-mentioned results, it was revealed that the separators E and F of the Example prepared by the wet method elongated more hardly and withstood higher pressure than the separator G of the Comparative Example prepared by the dry method. From this, it can be presumed that when needle-like protrusions similar to the puncturing probe used in the above-mentioned determination are present in the positive and the negative electrodes, the use of the wet-method separators E and F will markedly improve the leak resistance as compared with the use of the dry-method separator G.

Though the reason why the wet-method separator elongates more hardly and withstands higher pressure is not definitely clear, it can be considered that the wet method uses shorter fiber than in the dry method in order to facilitate uniform dispersion of the fiber in water and hence the number of binding points of fibers with each other are larger in the wet method than in the dry method; resultantly the separator obtained by the wet method elongates less and withstand higher pressure.

With regard to the fiber length, a sweeping statement cannot be given because the strength of a separator is influenced also by the unit area weight of the separator, the shape of the puncturing probe and other factors. However, it has been found after extensive study that, under the conditions of the present Example, a puncture strength intended in the present invention can be obtained when the fiber length is not more than 30 mm.

The separator F of the Example using high modulus polypropylene fiber elongated more hardly and withstood higher pressure than the separator E of the Example using no high modulus polypropylene fiber. This can be attributed to the higher crystal orientation and resultant higher rigidity of the high modulus polypropylene fiber.

From the above-mentioned 5 times of puncture strength determination, taking the maximum value minus the minimum value as "fluctuation", the fluctuations of puncture strength, etc. were calculated and were compared between the respective separators. The separator E of the Example showed a puncture strength fluctuation of 215 gf, a displacement fluctuation of 0.28 mm and a puncture strength index fluctuation per unit area weight of 1 $g/m^2$ of 1.07 gf/mm; the separator F of the Example showed 125 gf, 0.23 mm and 0.71 gf/mm, respectively; and the separator G of the Comparable Example showed 425 gf, 0.75 mm and 1.83 gf/mm, respectively. These results are shown in Table 3.

Table 3

| Separator | Strength fluctuation (gf) | Displacement fluctuation (mm) | Strength index fluctuation (gf/mm) |
|---|---|---|---|
| E | 215 | 0.28 | 1.07 |
| F | 125 | 0.23 | 0.71 |
| G | 425 | 0.75 | 1.83 |

The separator G showed larger fluctuations than the separators E and F in all of the strength, displacement and strength index. The reason why the wet method separators E and F of the Example show a smaller strength fluctuation than the separator G is not definitely clear, but it is generally said that wet method separators show a smaller unit area weight fluctuation (about 1/2 that of dry method ones) than dry method separators. These results can be presumably interpreted as follows. The wet method fabric is less different in local density of fibers than the dry method fabric and is more uniform in texture, and hence the difference in strength between the respective points of determination is smaller. Moreover, when separators are prepared respectively by the wet method and the dry method by using the fibers which have same diameter to give the same unit area weight and the same thickness, the pores in the wet method separator are smaller in size and more uniform in distribution than in the dry method one, in other words, the interstices between fibers are smaller and large pores are not present in the former separator; resultantly the difference in strength between the respective points is smaller.

From the above description, the wet method separator, as compared with the dry method separator, is more effective in suppressing the leak due to needle-like protrusions of the positive and the negative electrodes and additionally can be expected to be more effective in preventing the active materials which have fallen off from the positive and the negative electrodes from reaching the opposite electrode sides through the pores of the separator; resultantly, the wet method separator has a more improved leak resistance.

[Preparation of battery]

Sealed-type nickel-metal hydride storage batteries of SUM-4 size each having a nominal capacity of 650 mAh were prepared by using respectively the separators E and F of the Example and the separator G of the Comparative Example, and were respectively designated as the batteries E and F of Example and the battery G of the Comparative Example.

The batteries E, F and G used the same materials except for the separator. The structure of the batteries is shown below.

The positive electrode plate used was prepared by adding 7 parts by weight of cobalt hydroxide powder and water to 100 parts by weight of nickel hydroxide powder of the active material to which a small amount of zinc, cobalt or the like had been added to form a coprecipitated state, kneading the resulting mixture into the form of paste, filling the paste into a spongy nickel porous plaque, followed by drying and pressing, then dipping the porous plaque in a fluororesin dispersion, followed by drying, and then cutting the dried product into the desired dimension.

The negative electrode plate used was prepared by grinding a hydrogen absorbing alloy of a composition formula of $MmNi_{3.55}Mn_{0.4}A\ell_{0.3}Co_{0.75}$ (Mm representing a mixture of rare earth elements) having a crystal structure of $CaCu_5$ type in a ball mill to form a fine powder having an average particle diameter of 25 μm, treating the powder by dipping it in an aqueous potassium hydroxide solution at 80°C, followed by washing with water, then mixing the powder treated above with a dispersion of styrene-butadiene rubber, carboxymethyl cellulose, carbon and water to form a paste, coating the paste on a punched metal sheet of nickel-plated iron, followed by drying and pressing, and cutting the resulting sheet into the desired dimension. The negative electrode had a theoretical capacity of 1.4-1.5 times the theoretical capacity of the positive electrode, and the negative electrode plate had a length 35 mm longer than that of the positive electrode.

The separator used had a length 40 mm longer than twice the length of the positive electrode plate.

The alkaline electrolyte used was prepared by dissolving LiOH • $H_2O$ in an aqueous KOH solution of a specific gravity of 1.30 to a concentration of 40 g/ℓ.

The positive electrode plate and the negative electrode plate prepared above were spirally coiled with the separator E interposed therebetween to form an electrode plate assembly. The electrode plate assembly was placed in a battery case made of metal, the alkaline electrolyte was poured into the battery case, and the upper part of the battery case was closed with a sealing plate to form a nickel-metal hydride storage battery E of the present Example. A battery prepared with the same structure as the battery E except that the separator used was the separator F was designated as the nickel-metal hydride storage battery F of the present invention, and a battery prepared similarly except for using the separator G was designated as the nickel-metal hydride storage battery G of the Comparative Example.

The batteries E, F and G prepared above were each subjected to 3 cycles of preliminary charge and discharge in an atmosphere at 20°C and then subjected to a cycle life test. Separately, the percent defective due to physical leak in the battery preparation process was calculated as the ratio of the number of defective cells to the number of total cells constructed.

The percent defective due to physical leak between the positive and the negative electrodes in the preparation process of the batteries E, F and G and the life characteristic thereof are shown in Table 4.

The characteristic values regarding the strength of the separators E, F and G used in the batteries E, F and G are also shown in Table 4.

Table 4

| Battery | E | F | G |
|---|---|---|---|
| Unit area weight of separator (g/m²) | 56.1 | 60.3 | 63.3 |
| Average value of puncture strength of separator (gf) | 983 | 1114 | 620 |
| Displacement of separator till puncturing through (mm) | 2.48 | 2.32 | 2.23 |
| Average value of separator strength index per unit area weight 1 g/m² (gf/mm) | 7.07 | 7.96 | 4.39 |

Table 4 (continued)

| Battery | E | F | G |
|---|---|---|---|
| Fluctuation of separator strength index per unit area weight 1 g/m$^2$ (gf/mm) | 1.07 | 0.71 | 1.83 |
| Percent leak defective in battery preparation (%) | 0.6 | 0.4 | 1.2 |
| Life characteristic (cycle) | ≥500 | ≥500 | ≥500 |

As shown in Table 4, the battery F of the Example showed the least percent leak defective of 0.4% and the battery E of the Example gave a secondly good result of 0.6%, whereas the battery G of the Comparative Example showed a poor result of 1.2%.

It was revealed that the batteries E and F, which respectively used a separator having a puncture strength index of separator of 7.0 gf/mm or more per 1 g/m$^2$ of unit area weight of separator, gave a markedly smaller percent leak defective than the battery G.

The life characteristic shown in Table 4 was determined as follows. The battery to be tested is charged with a current of 0.65 A (1 CA) by using -ΔV (-ΔV = 10 mV) control and then discharged at a current of 0.65 A (1 CA) until the terminal voltage of the battery reached 1.0 V; the above procedure is taken as 1 cycle of charge and discharge. The charge and discharge was repeated, and the point of time when the discharge capacity has fallen to 60% or less of the nominal capacity of the battery, 650 mA, is taken as the end point of the battery life. The number of charge-discharge cycles at the point of time is defined as the life characteristic.

As is apparent from Table 4, the batteries E and F of the Example and the battery G of the Comparative Example could all maintain at least 60% of the nominal capacity until 500 cycles and thus the batteries E, F and G did not differ in the life characteristic of battery.

Then, the effect of the fiber diameter was studied with the polypropylene/polyethylene core-sheath type composite fiber. A separator was prepared under the same conditions as in the separator E except that 20% by weight of the same polypropylene/polyethylene core-sheath type composite fiber as used in the separator E and 80% by weight of a polypropylene/polyethylene core-sheath type composite fiber (average fiber diameter: 19 μm, average fiber length: 10 mm), which is thicker than the former fiber, were used. The separator was designated as the separator H of the Example.

Then a separator was prepared under the same conditions as in the separator E except that a polypropylene/polyethylene core-sheath type composite fiber (average fiber diameter: 16 μm, average fiber length: 10 mm), which is thicker than the polypropylene/ polyethylene core-sheath type composite fiber used in the separator E, was used. The separator was designated as the separator I of the Example. The separators H and I were tested in the same manner as above. The results obtained are shown in Table 5.

Table 5

| Battery | H | I |
|---|---|---|
| Unit area weight of separator (g/m$^2$) | 61.1 | 61.5 |
| Average value of puncture strength of separator (gf) | 906 | 1028 |
| Displacement of separator till puncturing through (mm) | 2.39 | 2.38 |
| Average value of separator strength index per unit area weight 1 g/m$^2$ (gf/mm) | 6.20 | 7.02 |
| Fluctuation of separator strength index per unit area weight 1 g/m$^2$ (gf/mm) | 0.65 | 1.11 |
| Percent leak defective in battery preparation (%) | 0.7 | 0.6 |
| Life characteristic (cycle) | ≥500 | ≥500 |

The results shown in Table 5 reveal that both the separators H and I have a separator puncture strength index per 1 g/m$^2$ of unit area weight of 6 gf/mm or more, which is higher than that of the separator G of the Comparative Example, and that the batteries H and I show a better, namely lower, percent leak defective in the battery preparation than the battery G of the Comparative Example.

The separator of the battery H showed a lower strength index and gave a slightly poorer percent leak defective of battery than the separator of the battery E. This is presumably because since the separator of the battery H used a thicker fiber them the separator of the battery E, the number of binding points between fibers decreased to lower the puncture strength and further, since the diameter of pores between fibers became large, the effect of preventing the materials which had fallen off from the positive and the negative electrodes from reaching the opposite electrodes decreased.

Though the separator of the battery I used thicker fiber than the separator of the battery E, the former separator gave substantially the same puncture strength index and percentage leak defective of battery as the latter separator. This is presumably because the separator of the battery I had a larger unit area weight than the separator of the battery E and resultantly had a larger puncture strength; this cancelled out the negative factor due to the use of thick fiber and resultant decrease in the number of binding points to make the former separator give substantially the same leak resistance as the separator of the battery E.

From the above-mentioned results, in order for a separator to exhibit an excellent leak resistance, the separator has a strength index of preferably 6 gf/mm or more, more preferably 7 gf/mm or more, per unit area weight of 1 g/m$^2$.

Such effects can be observed not only with a separator which has been imparted hydrophilicity by sulfonation but also with a separator subjected to acrylic acid graft polymerization.

The acrylic acid graft polymerization was conducted as follows. A polyolefin non-woven fabric was dipped in a solution comprising 20% by weight of acrylic acid, 76.7% by weight of distilled water, 0.2% by weight of benzophenone, 0.1% by weight of ferrous sulfate and 3.0% by weight of a nonionic surfactant for 10 minutes. The solution used had been deoxidized preliminarily in order to eliminate the influence of oxygen in the subsequent polymerization treatment as much as possible.

The non-woven fabric treated above was removed of excess solution and then irradiated from the both sides with ultraviolet light of an intensity of 200 mW/cm$^2$ by using a metal halide lamp in a deoxidized atmosphere of about 90°C to effect graft polymerization of acrylic acid. The fabric was then washed with water, dried, and treated with a calender to obtain a separator having a unit area weight of 59 g/m$^2$, a thickness of $120 \pm 20$ μm and a graft polymerization ratio of acrylic acid of $9 \pm 2\%$. The separator was determined for the puncture strength. A battery of SUM-4 size using the separator was prepared and examined for its percent defective and the cycle life characteristic. The results thus obtained were similar to those obtained with a sulfonated separator.

The hydrophilicity imparting treatment for a separator may also be conducted by coating a surfactant or by corona discharge to obtain a similar effect.

It is needless to say that similar effects to those described above can also be obtained in alkaline storage batteries other than nickel-metal hydride storage batteries, which include nickel-cadmium storage batteries, nickel-zinc storage batteries and manganese dioxide-metal hydride storage batteries.

EFFECT OF THE INVENTION

As described above, according to the present invention, there is provided an alkaline storage battery comprising a positive electrode, a negative electrode, a separator of a non-woven fabric comprising polyolefin resin fibers and having hydrophilic groups imparted thereto and an alkaline electrolyte, wherein the separator comprises at least two kinds of polyolefin fibers different in strength, the polyolefin fiber having the highest strength among said polyolefin fibers being a high modulus polyolefin fiber, the amount of said fiber being 5-50% by weight of the total fibers constituting the whole separator, the high modulus polyolefin fiber being preferably a high modulus polypropylene fiber, and the separator has a puncture strength, measured by using a cutter blade, improved at least 10% as compared with a separator which does not use the high modulus polypropylene fiber and has the same unit area weight and the same thickness as those of the separator of the present invention. As a result, an alkaline storage battery can be provided which is improved in leak resistance, reduced in occurrence of physical leak between the positive and the negative electrodes at the time of assembling the battery and has an excellent battery life characteristic.

Furthermore, there is provided an alkaline storage battery comprising a positive electrode, a negative electrode, a separator of a non-woven fabric comprising polyolefin resin fibers and having hydrophilic groups imparted thereto and an alkaline electrolyte, wherein the separator has a puncture strength index (gf/mm) (the puncture strength of a separator herein signifying the puncture strength of the separator (gf) divided by the displacement (mm) of the separator which takes place until the separator is punctured through) per unit area weight of the separator of 1 g/m$^2$ of at least 6 gf/mm. As the result, an alkaline storage battery can be provided which is improved in leak resistance, reduced in occurrence of physical leak between the positive and the negative electrodes at the time of assembling the battery and has an excellent battery life characteristic.

**Claims**

1. An alkaline storage battery comprising a positive electrode, a negative electrode, a separator of a non-woven fabric comprising polyolefin resin fibers and having hydrophilic groups imparted thereto and an alkaline electrolyte, wherein the separator comprises at least two kinds of polyolefin fibers different in strength, the polyolefin fiber having the highest strength among the polyolefin fibers being a high modulus polyolefin fiber, the amount of said fiber being 5-50% by weight of the total fibers constituting the whole separator.

2. The alkaline storage battery according to claim 1 wherein the separator uses a non-woven fabric which has a puncture strength at least 10% higher than a non-woven fabric which does not contain the high modulus polyolefin fiber and has the same unit area weight and the same thickness as those of the former non-woven fabric.

3. The alkaline storage battery according to claim 1 wherein the hydrophilic group of the separator is a sulfonic acid group.

4. The alkaline storage battery according to claim 1 wherein the hydrophilic group of the separator is graft-polymerized acrylic acid.

5. The alkaline storage battery according to claim 1 wherein the polyolefin fiber having the highest strength among the polyolefin fibers is a high modulus polypropylene fiber.

6. The alkaline storage battery according to claim 5 wherein the high modulus polypropylene fiber is a polypropylene fiber which, in X-ray diffraction analysis, when the incident X-ray is perpendicular to the fiber direction gives three diffraction peaks, namely the first peak, the second peak and the third peak, in the range of 10-20 degrees, the intensity of the first peak observed being at least 7 times the intensity observed at the same position with that of the first peak when the incidence is parallel to the fiber direction.

7. The alkaline storage battery according to claim 5, wherein the high modulus polypropylene fiber shows a peak value of the endothermic temperature in differential scanning calorimetry at least 5°C higher than that of polypropylene fiber.

8. The alkaline storage battery according to claim 5 wherein the separator uses a non-woven fabric which has a puncture strength at least 10% higher than that of a non-woven fabric which does not contain the high modulus polypropylene fiber and has the same unit area weight and the same thickness as those of the former non-woven fabric.

9. The alkaline storage battery according to claim 5 wherein the hydrophilic group of the separator is a sulfonic acid group.

10. The alkaline storage battery according to claim 5 wherein the hydrophilic group of the separator is graft-polymerized acrylic acid.

11. An alkaline storage battery comprising a positive electrode, a negative electrode, a separator of a non-woven fabric comprising polyolefin resin fibers and having hydrophilic groups imparted thereto and an alkaline electrolyte, wherein the separator has a puncture strength index (gf/mm) per unit area weight of 1 g/m$^2$ of at least 6 gf/mm, said puncture strength of a separator signifying the puncture strength (gf) of the separator divided by the displacement (mm) of the separator which takes place until the separator is punctured through.

12. The alkaline storage battery according to claim 11 wherein the hydrophilic group of the separator is a sulfonic acid group.

13. The alkaline storage battery according to claim 11 wherein the hydrophilic group of the separator is graft-polymerized acrylic acid.

# FIG. 1

EP 0 975 032 A1

# FIG. 2

# FIG. 3

FRONT SIDE
X-RAY

BACK SIDE

X-RAY INCIDENCE PERPENDICULAR
TO FIBER DIRECTION

# FIG. 4

FRONT SIDE
X-RAY

BACK SIDE

X-RAY INCIDENCE IN PARALLEL
TO FIBER DIRECTION

# FIG. 5

# FIG. 6

# FIG. 7

# FIG. 8

# FIG. 9

# FIG. 10

# EP 0 975 032 A1

**European Patent Office**

**EUROPEAN SEARCH REPORT**

Application Number

EP 99 11 2187

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 834 938 A (JAPAN VILENE CO LTD) 8 April 1998 (1998-04-08) * page 4, line 13-54 * * page 6, line 28 - page 7, line 23 * * examples 5-10 * | 1-13 | H01M2/16 |
| A | EP 0 848 436 A (MATSUSHITA ELECTRIC IND CO LTD) 17 June 1998 (1998-06-17) * page 3, line 12-28 * | 1-13 | |
| A | EP 0 710 994 A (PALL CORP) 8 May 1996 (1996-05-08) * page 4, line 10-21 * * page 5, line 14-43 * | 1-13 | |
| A | EP 0 316 916 A (MATSUSHITA ELECTRIC IND CO LTD) 24 May 1989 (1989-05-24) * the whole document * | 1-13 | |

TECHNICAL FIELDS SEARCHED (Int.Cl.7)

H01M

The present search report has been drawn up for all claims

| Place of search | Date of completion of the search | Examiner |
|---|---|---|
| MUNICH | 19 October 1999 | Engl, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 11 2187

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-1999

| Patent document cited in search report | | Publication date | Patent family member(s) | | Publication date |
|---|---|---|---|---|---|
| EP 0834938 | A | 08-04-1998 | JP | 10312786 A | 24-11-1998 |
| | | | JP | 10312787 A | 24-11-1998 |
| | | | JP | 10154502 A | 09-06-1998 |
| | | | EP | 0878854 A | 18-11-1998 |
| | | | EP | 0872901 A | 21-10-1998 |
| EP 0848436 | A | 17-06-1998 | JP | 10172533 A | 26-06-1998 |
| | | | CN | 1185043 A | 17-06-1998 |
| EP 0710994 | A | 08-05-1996 | US | 5589302 A | 31-12-1996 |
| | | | CA | 2151303 A | 05-05-1996 |
| | | | CN | 1128411 A | 07-08-1996 |
| | | | JP | 8227704 A | 03-09-1996 |
| EP 0316916 | A | 24-05-1989 | JP | 1132042 A | 24-05-1989 |
| | | | JP | 2762443 B | 04-06-1998 |
| | | | JP | 1132043 A | 24-05-1989 |
| | | | JP | 1132044 A | 24-05-1989 |
| | | | JP | 6101323 B | 12-12-1994 |
| | | | DE | 3887460 D | 10-03-1994 |
| | | | DE | 3887460 T | 26-05-1994 |
| | | | US | 5100723 A | 31-03-1992 |
| | | | US | 5213722 A | 25-05-1993 |

EPO FORM P0459